(19) **Europäisches Patentamt / European Patent Office / Office européen des brevets**

(11) **EP 1 964 256 B1**

(12) # FASCICULE DE BREVET EUROPEEN

(45) Date de publication et mention
de la délivrance du brevet:
**11.05.2011 Bulletin 2011/19**

(21) Numéro de dépôt: **06842096.7**

(22) Date de dépôt: **05.12.2006**

(51) Int Cl.:
*H02P 27/06* (2006.01)       *H02P 27/08* (2006.01)
*H02M 5/458* (2006.01)       *G06F 1/025* (2006.01)

(86) Numéro de dépôt international:
**PCT/FR2006/051285**

(87) Numéro de publication internationale:
**WO 2007/077372 (12.07.2007 Gazette 2007/28)**

(54) **PROCEDE DE COMMANDE D'UN ONDULEUR DE TENSION POLYPHASE**

VERFAHREN ZUR STEUERUNG EINES MEHRPHASEN-SPANNUNGSWECHSELRICHTERS

METHOD FOR CONTROLLING A POLYPHASE VOLTAGE INVERTER

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **22.12.2005 FR 0513141**

(43) Date de publication de la demande:
**03.09.2008 Bulletin 2008/36**

(73) Titulaire: **VALEO EQUIPEMENTS ELECTRIQUES
MOTEUR
94046 Créteil Cedex (FR)**

(72) Inventeurs:
 • **HOBRAICHE, Julien
   F-60200 Compiegne (FR)**
 • **VILAIN, Jean-Paul
   F-60150 Melicocq (FR)**

(56) Documents cités:
**EP-A- 0 911 950        US-A- 5 706 186
US-A1- 2005 029 982     US-B1- 6 182 235
US-B1- 6 462 974        US-B1- 6 653 812**

EP 1 964 256 B1

## Description

### *Domaine de l'invention*

L'invention concerne un procédé de pilotage d'un pont de puissance destiné à commander une charge électrique comportant plusieurs phases, le pont de puissance étant destiné à être relié à la charge électrique via plusieurs bras, au moins un par phase, et étant destiné à être piloté par des fonctions de commutations, lesdites fonctions de commutation déterminant des vecteurs de commande pour commander la charge, lesdits vecteurs de commande se subdivisant en vecteurs de commande de roue libre et en vecteurs de commande actifs.

La présente invention trouve des applications particulièrement avantageuses, mais non exclusives, dans les domaines du secteur automobile, du secteur aéronautique, du secteur industriel.

Un but de l'invention est de réduire les pertes dans un onduleur de tension polyphasé.

L'invention a également pour but de conserver un contrôle de la charge polyphasée en aval de l'onduleur tout en réduisant les pertes par commutation de l'onduleur.

### *Etat de la technique*

Généralement, un pont de puissance de tension polyphasé est utilisé pour l'entraînement d'une charge électrique polyphasée. Ces charges électriques sont par exemple des machines réversibles telles que des alterno-démarreurs. Le pont est relié en amont à une source d'alimentation continue et raccordé en aval aux enroulements de phase de la charge polyphasée. Le pont de puissance est alimenté en énergie par la source d'alimentation continue en mode moteur, et par l'alterno-démarreur en mode alternateur.

Le pont de puissance comporte plusieurs bras de pont comportant, par exemple, chacun deux interrupteurs munis de diodes de roue libre. Ce type de pont est un pont deux niveaux. Le point milieu de chaque couple d'interrupteurs d'un même bras de pont est relié à un enroulement de phase de la charge. La logique de commande permet de commander les interrupteurs d'un même bras de pont.

Actuellement, on peut générer plusieurs combinaisons des interrupteurs des bras de pont auxquels on peut associer une représentation vectorielle des tensions de sortie de l'onduleur que l'on nommera des vecteurs de commande du pont de puissance. Ces vecteurs de commande sont composés de vecteurs actifs et de vecteurs de roue libre.

Dans l'état de la technique, on connaît différents types de techniques de pilotage d'un onduleur polyphasé, parmi lesquels on trouve le document "A.M. Hava, R.J. Kerkman, et T.A. Lipo. A high performance generalized discontinuous pwm algorithm. IEEE Trans. on Industry Applications, Vol.34 (N˚5), Septembre/Octobre 1998." Ce document décrit des techniques de pilotage, qui utilisent notamment des stratégies de modulation de largeur d'impulsions discontinues, pilotant d'une part la partie aval du pont de puissance et d'autre part le pont lui même.

Ces techniques de pilotage bloquent alternativement un des bras de pont du pont de puissance. Pour cela, en fonction de la stratégie de modulation de largeur d'impulsions employée, une quantité de neutre est déterminée pour chaque déphasage tension-courant d'une phase de la charge. Pour chaque phase de la charge, une modulante est déterminée et translatée par ajout d'une quantité de neutre. Avec ces techniques de pilotage, un bras de pont est bloqué lorsque sa modulante est saturée à +1 ou -1.

De telles techniques de pilotage présentent des inconvénients. En effet, il n'est pas possible de déterminer la quantité de neutre à ajouter aux modulantes, lorsque le système n'est pas en régime permanent. En outre, en régime permanent, cette quantité de neutre est soit calculée en ligne, ce qui nécessite un temps de calcul assez long, soit tabulée ce qui entraîne une consommation importante de mémoire.

De plus, pour ces techniques de pilotage de l'état de la technique cité, la connaissance du déphasage tension-courant de la charge polyphasée est nécessaire. Or, le calcul ou la mesure de ce déphasage est très complexe à mettre en oeuvre.

De même, l'implantation numérique de ces techniques pose des problèmes de réalisation. En effet, lors de leur implantation il faut prendre en compte d'une part les nombreux points de fonctionnement de la charge polyphasée (par exemple, moteur, alternateur, démarreur à différentes vitesse et couple d'un alterno-démarreur) pour appliquer une quantité de neutre optimale correspondante ; et d'autre part des stratégies différentes correspondant à chaque quantité de neutre appliquée. L'algorithme permettant de réaliser l'implantation numérique est ainsi long et fastidieux à mettre en oeuvre.

Par US 5,706,186, il est connu un procédé pilotant un pont de puissance destiné à commander une charge électrique comportant plusieurs phases. Le pont de puissance est relié à la charge électrique via plusieurs bras, au moins un par phase, et est piloté par des fonctions de commutations. Ces fonctions de commutation déterminent des vecteurs de commande pour commander la charge, les vecteurs de commande se subdivisant en vecteurs de commande de roue libre et en vecteurs de commande actifs. De plus, ce procédé comporte l'application d'une méthode de production de fonctions de commutations qui produit un nombre réduit de combinaisons de fonctions de commutation correspondant à des vecteurs de commande de roue libre pour produire une succession de vecteurs de commandes. Une réduction des pertes de commutation est ainsi obtenue.

Exposé de l'invention

La présente invention concerne un procédé de pilotage d'un pont de puissance tel que défini par la revendication 1. Le procédé de l'invention fait appel à une méthode de production de fonctions de commutations.
La méthode de l'invention permet en fait de bloquer un bras de pont dans un état donné et donc de réduire les pertes par commutation induite dans celui-ci s'il avait été amené à commuter au cours de la période de découpage. La méthode autorise le choix entre deux bras de pont à bloquer. En choisissant, dans certaines zones, le bras de pont blocable dans lequel le courant est maximum en valeur absolue on effectue un choix optimal permettant d'avoir un gain maximal en terme de pertes par commutation.
Selon des modes de réalisation non limitatifs, le procédé selon l'invention comporte les caractéristiques supplémentaires suivantes prises isolément ou en combinaison:

- La méthode de production de fonctions de commutations comporte une étape de détermination d'une modulante associée à chaque bras du pont à partir de consignes de tension scalaires.

- La détermination d'une modulante est effectuée selon une stratégie intersective. Ainsi, le calcul des modulantes par une stratégie de type intersective est le plus naturel car il y a alors une relation simple, facilement réalisable sur un processeur de signaux.

- La détermination d'une modulante est effectuée selon une stratégie barycentrique. Bon nombre de variateurs actuels calculent déjà les modulantes de cette manière. On peut alors naturellement et rapidement adapter le procédé à ce qui existe dans la logique de commande existante.

- La relation d'ordre est une comparaison entre les modulantes associées aux bras de pont.

- Les bras de pont sélectionnés correspondent aux bras de pont ayant la modulante la plus importante et la modulante la moins importante.

- Le bras de pont à bloquer est choisi parmi les bras de pont sélectionnés et est celui qui comporte un courant de phase le plus important en valeur absolue parmi des courants de phase correspondant respectivement à une plus grande des modulantes et une plus petite des modulantes parmi les modulantes associées aux bras de pont. Ainsi, l'établissement d'une relation d'ordre entre les modulantes et les comparaisons de courants en valeur absolue sont des calculs élémentaires simples à mettre en oeuvre sur un processeur de signaux. Ils permettent en fait de déterminer avec exactitude le bras de pont optimal à bloquer pour économiser le maximum de pertes par commutation.

- Si le bras de pont à bloquer est celui correspondant à la plus grande des modulantes, alors le bras de pont est bloqué à l'état haut, et si le bras de pont à bloquer est celui correspondant à la plus petite des modulantes, alors le bras de pont est bloqué à l'état bas.

- La méthode de production des fonctions de commutation comporte en outre une étape de déterminer une quantité de neutre à ajouter à une modulante en fonction d'un état haut ou bas d'un bras de pont à bloquer.

- Ainsi,

  - si un bras doit être bloqué à l'état haut alors la quantité de neutre est égale à une première valeur maximale moins la modulante associée audit bras, et
  - si le bras doit être bloqué à l'état bas alors la quantité de neutre est égale à une deuxième valeur minimale moins la modulante associée audit bras.

- La méthode de production de fonctions de commutations comporte une étape de comparaison de modulantes translatées d'une quantité de neutre avec une simple porteuse, une modulante étant associée à chaque bras de pont, ladite comparaison définissant des fonctions de commutation pour piloter ledit pont. Ainsi, une méthode de comparaison de modulantes translatées avec une porteuse permet de définir facilement et rapidement l'évolution des fonctions de commutation qui piloteront l'onduleur. C'est de plus une méthode qui peut être utilisée sur les processeurs de signaux dédiés au contrôle machine électrique. De plus, la simple porteuse est simple à mettre en oeuvre et en général, elle est présente de manière native dans les processeurs dédiés contrôle machine électrique.

- La simple porteuse est un triangle isocèle comportant un sommet se trouvant à une valeur maximale et une base se trouvant à une valeur minimale. Ainsi, une forme d'onde de type porteuse triangulaire isocèle garantit le centrage des impulsions de commande autour de la demi période de découpage ce qui est connu pour diminuer le taux de distorsion harmonique des courants de phase dans la charge.

- L'étape de blocage d'un bras de pont est fonction de la position d'un vecteur tension de consigne dans un domaine du plan déterminé par des vecteurs de commande, le vecteur tension de consigne ($\vec{V}^*$) étant déterminé à partir de consignes de tension scalaires.

- Le domaine du plan est défini dans un repère statorique, ledit repère statorique étant subdivisé en secteurs angulaires et en ce que l'étape de blocage d'un bras de pont dans un état haut ou un état bas est fonction de la position du vecteur tension de consigne dans un des secteurs angulaires.

- Ainsi,

  - si le vecteur tension de consigne est dans un premier secteur angulaire alors-le premier bras est bloqué à l'état haut,
  - si le vecteur tension de consigne est dans un deuxième secteur angulaire alors le troisième bras est bloqué à l'état bas,
  - si le vecteur tension de consigne est dans un troisième secteur angulaire alors le deuxième bras est bloqué à l'état haut,
  - si le vecteur tension de consigne est dans un quatrième secteur angulaire alors le premier bras est bloqué à l'état bas,
  - si le vecteur tension de consigne est dans un cinquième secteur angulaire alors le troisième bras est bloqué à l'état haut,
  - si le vecteur tension de consigne est dans un sixième secteur angulaire alors le deuxième bras est bloqué à l'état bas.

- L'étape de blocage d'un bras de pont est fonction d'un vecteur courant.

### Brève description des dessins

L'invention sera mieux comprise à la lecture de la description qui suit et à l'examen des figures qui l'accompagnent. Celles-ci sont présentées à titre indicatif et nullement limitatif de l'invention. Les figures montrent :

Figure 1a : Une illustration de moyens mettant en oeuvre le procédé, selon l'invention.
Figure 1b : une représentation d'un repère statorique utilisé dans le procédé de la Figure 1 a,
Figure 1c : une représentation d'une décomposition d'un vecteur consigne dans le repère statorique de la Figure 1b,
Figure 2 : Une illustration des étapes d'un premier mode de réalisation et d'un deuxième mode non limitatif du procédé selon l'invention,
Figure 3 : une représentation d'un repère statorique utilisé dans le deuxième mode de réalisation de la Fig. 2,
Figure 4 : une illustration d'une des étapes du procédé de la Fig. 2 correspondant à une comparaison entre une porteuse et les modulantes de chacun des bras de pont de l'onduleur.

### Description détaillée de modes de réalisation de l'invention

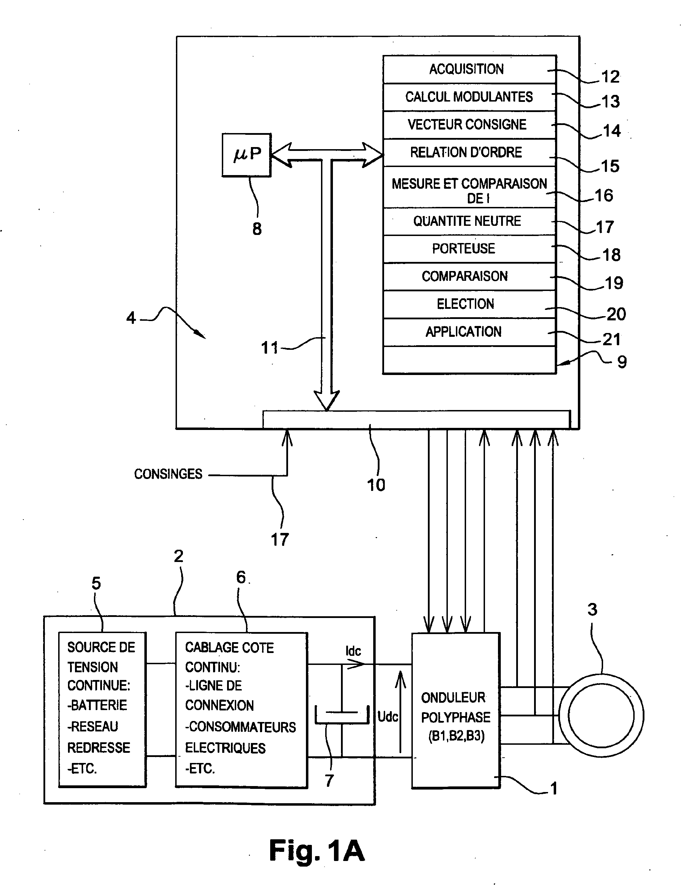

La Fig. 1a montre un pont de puissance polyphasé 1 relié en amont à un bus continu 2, en aval à une charge 3 polyphasée et commandée par des vecteurs de commande produits par une logique de commande 4. Le pont de puissance 1 est un dispositif électrique qui est destiné à convertir une tension continue en plusieurs tensions sinusoïdales, une par phase lorsque la charge associée fonctionne en mode moteur. Il est alors appelé onduleur. En mode alternateur (générateur), le pont de puissance convertit des tensions phases sinusoïdales en tension continue pour alimenter un consommateur tel qu'une batterie. Il est alors appelé pont redresseur commandé.

Le pont de puissance 1 comporte plusieurs bras de pont (non représentés). Chaque bras de pont est constitué de plusieurs interrupteurs INT commandables électroniquement.

Autrement dit, L'onduleur est un convertisseur continu-alternatif. Du coté alternatif on place une charge polyphasée. Du coté continu se trouve le bus continu. Il faut fournir de l'énergie à la charge polyphasée, elle doit venir du bus continu (mode moteur). En mode alternateur, c'est la charge polyphasée qui fournit de l'énergie au bus continu. La charge polyphasée est donc une source d'énergie réversible dont une caractéristique est une tension continue à ses bornes.

Pour le reste de la description, on prend comme exemple non limitatif un pont de puissance triphasé deux niveaux, sachant qu'il peut être remplacé par d'autres types de ponts de puissance existants tel que dans un exemple non limitatif un onduleur triphasé trois niveaux, celui ayant alors trois vecteurs de roue libre disponibles.

Dans le reste de la description, on se place dans le cas où le pont de puissance est un onduleur. Bien entendu tout ce qui est décrit dans la suite de la description pour l'onduleur s'applique également à un pont redresseur à la différence près entre un onduleur et un pont redresseur qui vient d'être cité précédemment.

L'onduleur 1 est alors un onduleur triphasé pilotant la charge 3. Il comporte donc trois bras de pont B1, B2, et B3. Chaque bras de pont comporte dans un exemple non limitatif deux interrupteurs INT bidirectionnels en courant munis de diodes de roue libre. Par exemple, le premier bras comporte les interrupteurs haut INT11, et bas INT12, le deuxième bras, les interrupteurs haut INT21, et bas INT22, et le troisième bras les interrupteurs haut INT31, et bas INT32.

Le bus continu 2 comporte une source de tension continue 5. Cette source de tension continue 5 est, dans un exemple préféré, une batterie ou un réseau redressé. Cette source de tension 5 alimente l'onduleur 1. Dans l'exemple de la Fig. 1a, des dispositifs 6 qui sont notamment des lignes de connexions et/ou des consommateurs électriques sont branchés en série et/ou en parallèle à la source de tension 5. Ces consommateurs électriques peuvent être entre autres, dans le cas d'un véhicule automobile, des phares, une radio, une climatisation, la liste n'est pas exhaustive.

Le bus continu 2 comporte également un condensateur de découplage 7 branché parallèlement à la source de tension 5. Ce condensateur 7 est situé de préférence au plus prés de l'onduleur 1. Cela permet de diminuer l'inductance de ligne entre le condensateur et les interrupteurs. Ainsi, on évite d'augmenter les surtensions au moment des commutations des interrupteurs et donc de casser lesdits interrupteurs.

Le courant dans le condensateur 7 représente la partie ondulatoire du courant de source. Le condensateur 7 à pour rôle de filtrer le courant de source entrant dans l'onduleur 1. Cela permet à la source de tension 5 de ne délivrer que la valeur moyenne dudit courant de source à l'onduleur 1..

La charge 3 peut être dans des exemples non limitatifs un moteur asynchrone, synchrone, etc. Le point milieu de chaque couple d'interrupteurs d'un même bras de pont de l'onduleur 1 est relié à une phase de la charge 3.

Comme on le verra en détail plus loin, l'onduleur 1 est piloté en modulation de largeur d'impulsions, couramment appelé MLI ou encore PWM en anglais « Pulse Width Modulation »), par la logique de commande 4. Ce type de commande permet d'avoir une alimentation en tension à fréquence variable et niveau de tension variable. On peut donc adapter pour chaque condition particulière de fonctionnement de la charge électrique (par exemple si en mode alternateur, on doit fournir une certaine puissance pour alimenter des consommateurs, on aura besoin d'un vecteur tension de norme donnée, et tournant à une vitesse donnée), la valeur des courants dans la charge ainsi que leurs fréquences. Par conséquent le pilotage en MLI permet de piloter la charge avec précision.

Pour piloter un onduleur polyphasé, la logique de commande 4 définit l'état ouvert ou fermé de l'ensemble des interrupteurs de l'onduleur 1. De façon non limitative, la logique de commande 4 permet de commander de manière complémentaire les interrupteurs d'un même bras de pont. Cela permet d'éviter de mettre en court-circuit la source d'alimentation.

L'antagonisme de commande des interrupteurs d'un même bras de pont et le nombre fini d'interrupteurs fait que le nombre de configurations possibles des interrupteurs des bras de pont est fini.

Pour l'onduleur 1 triphasé deux niveaux, on peut générer huit configurations différentes des interrupteurs des bras de pont. A chacune de ces huit configurations, on peut associer une représentation vectorielle des tensions de sortie de l'onduleur que l'on nommera des vecteurs de commande de l'onduleur. Ces vecteurs de commande sont communément appelés vecteur de sortie de l'onduleur.

Le vecteur de commande est une représentation mathématique qui traduit la résultante des tensions réelles appliquées sur la charge 3. Parmi ces configurations, six sont des états actifs $\vec{V}1$ à $\vec{V}6$ correspondant à une amplitude du vecteur de commande fixe et se distinguent par la phase et deux $\vec{V}0$ et $\vec{V}7$ sont des états dits de "roue libre" pour lesquels l'amplitude du vecteur de commande est nulle et sa phase ($\varphi$ = arc tangente y/x) n'est pas définie. On notera que la phase des vecteurs actifs est définie comme étant l'angle orienté entre l'axe alpha d'un repère statorique (définit en détail plus loin) et le vecteur actif correspondant. Ainsi, pour $\vec{V}1$, la phase vaut 0, la phase de $\vec{V}2$ vaut 60 ˚, etc.

Dans un mode de réalisation non limitatif, un vecteur de commande produit par la logique de commande 4 comporte autant de fonctions de commutation SC que la charge 3 comporte de phases. Dans le cas de l'exemple pris d'un onduleur triphasé deux niveaux, commandé en complémentaire, on a trois fonctions de commutation SC pour un vecteur de commande.

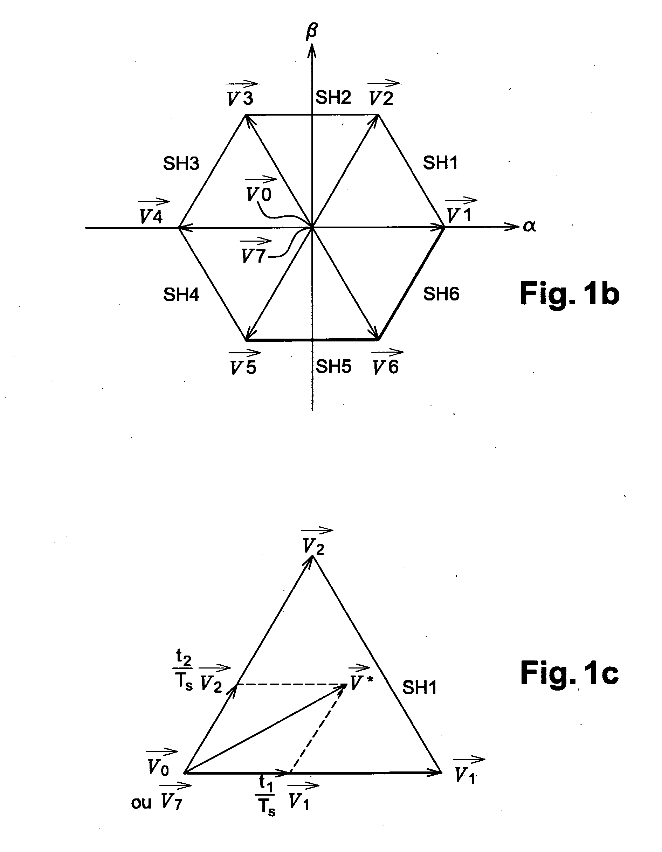

Les vecteurs de commande produits par la logique de commande 4 peuvent être représentés dans un repère statorique illustrés à la Fig. 1 b. Le repère statorique est un repère d'axe ($\alpha$, $\beta$) fixes liés au stator. L'axe $\alpha$ est horizontale et l'axe $\beta$ est verticale. L'axe à est à 90 degrés de l'axe $\beta$. Dans un exemple préféré, le vecteur de commande $\vec{V}1$ se situe sur l'axe $\alpha$. L'extrémité des vecteurs de commande actifs $\vec{V}1$ à $\vec{V}6$ forment un hexagone. Le centre de l'hexagone est relié à chacun de ses sommets par un vecteur de commande actif. Dans un mode de réalisation non limitatif, les vecteurs de commande actifs $\vec{V}1$ à $\vec{V}6$ sont à 60 degrés les uns des autres. Ainsi, l'hexagone est décomposé en six secteurs actifs SH, chaque secteur actif étant formé par deux vecteurs actifs adjacents et a son centre au centre de l'hexagone.

Dans un exemple, le premier secteur SH1 est représenté par les vecteurs de commande $\vec{V}1$ et $\vec{V}2$ ainsi de suite jusqu'au sixième secteur SH6 qui est représenté par les vecteurs de commande $\vec{V}6$ et $\vec{V}1$, chacun des vecteurs comportant trois fonctions de commutation SC dans l'exemple pris.

Les vecteurs de commande de roue libre $\vec{V}0$ et $\vec{V}7$, ayant une amplitude nulle, se situent à l'intersection de l'axe $\alpha$ et de l'axe $\beta$. L'intersection de l'axe $\alpha$ et de l'axe $\beta$ est le centre du repère statorique qui est également le centre de l'hexagone.

Ainsi, dans un exemple, les fonctions de commutation SC desdits vecteurs sont représentées dans le tableau suivant. On a une correspondance entre les combinaisons des fonctions de commutation SC et les vecteurs de commande associés.

| Vecteur | SC1 | SC2 | SC3 |
|---------|-----|-----|-----|
| $\vec{V}0$ | 0 | 0 | 0 |
| $\vec{V}1$ | 1 | 0 | 0 |
| $\vec{V}2$ | 1 | 1 | 0 |
| $\vec{V}3$ | 0 | 1 | 0 |
| $\vec{V}4$ | 0 | 1 | 1 |
| $\vec{V}5$ | 0 | 0 | 1 |
| $\vec{V}6$ | 1 | 0 | 1 |
| $\vec{V}7$ | 1 | 1 | 1 |

Avec « 0 » correspondant à une commande de fermeture de l'interrupteur bas d'un bras de pont et à une commande d'ouverture de l'interrupteur haut du même bras de pont ; et « 1 » correspondant à une commande d'ouverture de l'interrupteur bas d'un bras de pont et à une commande de fermeture de l'interrupteur haut du même bras de pont Par exemple, si SC1 = 1, SC2 = 0 et SC3 = 0 ; l'interrupteur haut INT11 du premier bras B1 est fermé, l'interrupteur bas INT12 du premier bras B1 est ouvert, l'interrupteur haut INT21 du deuxième bras B2 est ouvert, l'interrupteur bas INT22 du deuxième bras B2 est fermé, et enfin l'interrupteur haut INT31 du troisième bras B3 est ouvert et l'interrupteur bas INT32 du troisième bras est fermé.

La logique de commande 4 permettant de commander les interrupteurs de l'onduleur, est, souvent réalisée sous forme de circuit intégré. Dans un exemple, Fig. 1a, cette logique de commande 4 comporte :

- un microprocesseur 8,
- une mémoire 9 de programme,
- et une interface 10 d'entrée sortie, le microprocesseur 8, la mémoire 9 et l'interface 10 d'entrée sortie étant interconnectés par un bus 11.

Dans la pratique, lorsque l'on prête une action à un dispositif, celle-ci est réalisée par un microprocesseur du dispositif commandé par des codes instructions enregistrés dans une mémoire de programme du dispositif. La logique de commande 4 est un tel dispositif.

La mémoire 9 de programme est divisée en plusieurs zones, chaque zone correspondant à des codes instructions pour réaliser une fonction du dispositif. La mémoire 9 comporte ainsi :

- une zone 12 comportant des codes instructions pour la mise en oeuvre de l'acquisition des consignes de tension,
- une zone 13 comportant des codes instructions pour réaliser un calcul des modulantes en fonction de la stratégie choisie (stratégie intersective ou stratégie barycentrique) comme on va le voir en détail plus loin,
- une zone 14 comportant des codes instructions pour déterminer un vecteur tension de consigne $\vec{V}^*$ en fonction de consignes de tension scalaires V1*, V2*, V3* qui sont les tensions que l'on souhaite appliquer à la charge 3.
- une zone 15 comportant des codes instructions pour réaliser une relation d'ordre entre les modulantes,
- une zone 16 comportant des codes instructions pour réaliser une mesure et une comparaison des courants de phase de la charge 3,

- une zone 17 comportant des codes instructions pour déterminer une quantité de neutre en fonction du résultat de la comparaison des courants de phase de la charge 3,
- une zone 18 comportant des codes instructions pour déterminer une porteuse pour générer des impulsions de largeur variable en fonction d'une ou plusieurs modulantes,
- une zone 19 comportant des codes instructions pour réaliser une comparaison entre la porteuse et les modulantes translatées de la quantité de neutre déterminée,
- une zone 20 comportant des codes instructions pour réaliser une élection de vecteurs de commande à partir de cette comparaison,
- une zone 21 comportant des codes instructions pour réaliser une application desdits vecteurs de commande à l'onduleur 1.

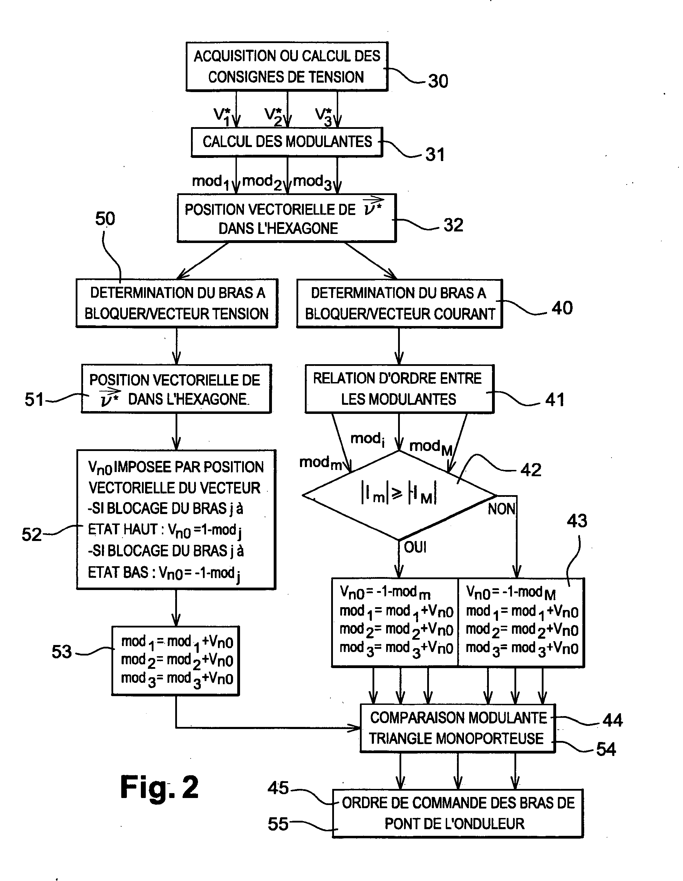

La Fig. 2 montre le procédé de fonctionnement des moyens illustrés à la Fig. 1 a. Un tel procédé permet de choisir, de manière simplifiée, une succession de vecteur de commande pilotant l'onduleur 1 tout en réduisant les pertes par commutation dans ce dernier.

**Dans une première étape 30)**, la logique de commande 4 acquiert les trois consignes de tensions scalaires V1*, V2* et V3* de chacun des trois bras de l'onduleur 1. Ces trois consignes de tensions scalaires V1*, V2* et V3* sont les tensions qu'on souhaite appliquer à la charge 3. Ces trois consignes de tensions scalaires V1*, V2* et V3* peuvent être mesurées ou calculées par la logique de commande 4.

Ces consignes peuvent ainsi être calculées en interne par la logique de commande (gestion par exemple de la boucle de régulation des courants de phase de la charge dans la logique de commande). On peut également avoir une logique de commande de supervision qui fournit les tensions de consigne à la logique de commande 4 par le biais d'une liaison série, parallèle ou CAN. Il faudra alors que la logique de commande 4 mesure les informations fournies par le superviseur.

**Dans une deuxième étape 31)**, la logique de commande 4 détermine pour chaque bras de pont de l'onduleur 1, une modulante correspondante mod1, mod2, mod3. La logique de commande 4 peut déterminer les modulantes de plusieurs manières (stratégie intersective ou stratégie barycentrique non limitatives) comme on va le voir en détail ci-après, lesdites modulantes étant fonction des consignes de tension scalaires. On notera qu'une modulante représente une valeur normalisée par rapport à la tension de bus continu de la consigne de tension scalaire d'un bras de pont de l'onduleur. L'intersection modulante-triangle va fournir les ordres de commande en MLI du bras de pont comme on va le voir en détail plus loin.

Stratégie intersective

Dans un premier mode de réalisation non limitatif, la logique de commande peut calculer les modulantes selon une stratégie intersective. Dans ce cas, La logique de commande 4 mesure ou estime la tension du bus continu $U_{DC}$, de préférence près de l'onduleur 1 pour obtenir la tension réelle disponible aux bornes dudit onduleur 1. La logique de commande 4 détermine la modulante de chaque phase de la charge 3. La modulante est associée à chaque bras de pont. Cette modulante est dans un exemple non limitatif une valeur normalisée d'une consigne de tension scalaire par rapport à la tension de source $U_{DC}$. Ainsi, pour chacune des trois consignes de tensions scalaires V1*, V2* et V3*, la logique de commande 4 détermine respectivement les trois modulantes mod1, mod2 et mod3.

Ainsi, la normalisation s'effectue de la manière suivante :

$$\mathrm{mod} = \frac{Max - Min}{U_{DC}} V^* + Min$$

Max étant la valeur la plus élevée atteinte par une porteuse triangulaire qui va être définie par la suite.

Min étant la valeur la plus faible atteinte par la porteuse triangulaire.

Ce qui donne avec une valeur Min = -1 et Max = 1 :

$$\mathrm{mod} = \frac{2.V_s^*}{U_{DC}} - 1$$

Ainsi,

$$\mathrm{mod}\,1 = \frac{2.V1^*}{U_{DC}} - 1$$

$$\mathrm{mod}\,2 = \frac{2.V2^*}{U_{DC}} - 1$$

$$\mathrm{mod}\,3 = \frac{2.V3^*}{U_{DC}} - 1$$

Ainsi dans ce cas, la tension Vs appliquée en sortie d'un bras de pont est égale à la commande du bras de pont multiplié par la tension continue $U_{DC}$.

Ainsi, pour chacune des trois consignes de tensions scalaires V1*, V2* et V3*, la logique de commande 4 détermine respectivement les trois modulantes mod1, mod2 et mod3.

Stratégie barycentrique

Dans un deuxième mode de réalisation non limitatif, la logique de commande 4 peut déterminer les modulantes mod1, mod2 et mod3 selon une stratégie barycentrique. Selon cette stratégie, on utilise deux vecteurs actifs et les deux vecteurs de roue libre sur la période de commande de l'onduleur 1 pour décomposer le vecteur tension de consigne. Pour ce faire, la logique de commande applique d'abord l'étape 32, avant de déterminer les trois modulantes mod1, mod2 et mod3 à l'étape 31.

On notera que la période de commande de l'onduleur représente l'intervalle de temps où l'on va commander une ouverture et une fermeture de l'interrupteur haut du bras de pont (la commande de l'interrupteur est complémentaire). On parle également de période de découpage.

Premièrement, la logique de commande 4 détermine à partir des trois consignes de tensions scalaires V1*, V2* et V3* un vecteur tension de consigne $\vec{V}^*$. La logique de commande 4 peut déterminer le vecteur tension de consigne $\vec{V}^*$ selon une transformation "Clarke" connue de l'homme du métier.

Dans ce cas, la logique de commande 4 calcule les deux composantes $V^*x$ et $V^*y$ formant ledit vecteur tension de consigne $\vec{V}^*$ selon les formules suivantes :

$$V^*x = \frac{2}{3}(V1^* - \frac{1}{2} \times V2^* - \frac{1}{2} \times V3^*)$$

et

$$V^*y = \frac{2}{3}(\frac{1}{2}\sqrt{3} \times V2^* - \frac{1}{2}\sqrt{3} \times V3^*) \quad .$$

On notera que bien entendu d'autres transformations peuvent être utilisées telle que la transformation de « Concordia » connue de l'homme du métier. Elle se différencie par le facteur de normalisation.

A l'étape 32, la logique de commande 4 détermine la position vectorielle du vecteur tension de consigne $\vec{V}^*$ dans l'hexagone formé par les vecteurs de commande $\vec{V}0$ à $\vec{V}7$ et plus particulièrement la position du vecteur de tension consigne dans un des secteurs actifs SH.

Ce vecteur tension de consigne $\vec{V}^*$ se trouve à tout moment dans un des six secteurs actifs SH de l'hexagone.

Ainsi, pour déterminer sa position, on calcule la phase du vecteur tension de consigne qui est égale à atan (V*y/V*x). Ensuite, on compare cette valeur avec la phase des vecteurs tension actifs. Par exemple si 0 < la phase du vecteur tension de consigne < 60° alors le vecteur tension de consigne se trouve dans le premier secteur.

Ensuite, le vecteur tension de consigne $\vec{V}*$ est décomposé sur les deux vecteurs de commande actifs adjacents composant le secteur actif SH dans lequel il se trouve, comme illustré à la Fig. 1c.

Dans un exemple, le vecteur tension de consigne $\vec{V}*$ est décomposé sur les deux vecteurs de commande actifs adjacents $\vec{V}1$ et $\vec{V}2$ composant le secteur actif SH1 dans lequel il se trouve illustré à la Fig. 1c.

Cette décomposition permet de déterminer des coefficients ti et tj tel que :

$$\vec{V}*=(\frac{ti}{Ts}\times\vec{Vi})+(\frac{tj}{Ts}\times\vec{Vj})\ .$$

Où Ts est la période selon laquelle l'onduleur est commandé. Et ti et tj correspondent aux temps d'applications des vecteurs de commande actifs $\vec{V}i$ et $\vec{V}j$ adjacents sur la période Ts, lesdits vecteurs de commande actifs définissant le secteur actif SH dans lequel se trouve le vecteur tension de consigne $\vec{V}*$ comme vu précédemment. Le secteur actif SHN est défini par les vecteurs de commande actifs adjacents $\vec{V}N\ et\ \vec{V}N+1$ , i = 1 à 5, et le secteur actif SH6 est défini par les vecteurs de commande actifs adjacents $\vec{V}6$ et $\vec{V}1$.

Une fois que les temps d'applications ti et tj sont connus, i.e. après la décomposition du vecteur tension de consigne $\vec{V}*$ dans le secteur actif de l'hexagone dans lequel il se trouve, la logique de commande 4 détermine les trois modulantes mod1, mod2 et mod3 pour le secteur actif SH concerné en fonction des temps d'applications des vecteurs de commande et de la période de commande de l'onduleur 1 via le tableau suivant :

| | Secteur SH1 | Secteur SH2 | Secteur SH3 |
|---|---|---|---|
| mod1 | (Max-Min)/Ts*(t1 + t2 + t0/2)+Min | (Max-Min)/Ts*(t2 + t0/2)+Min | (Max-Min)/Ts*(t0/2)+Min |
| mod2 | (Max-Min)/Ts*(t2 + t0/2)+Min | (Max-Min)/Ts*(t3 + t2 + t0/2)+Min | (Max-Min)/Ts*(t3 + t4 + t0/2)+Min |
| mod3 | (Max-Min)/Ts*(t0/2)+Min | (Max-Min)/Ts*(t0/2)+Min | (Max-Min)/Ts*(t4 + t0/2)+Min |
| | Secteur 4 | Secteur 5 | Secteur 6 |
| mod1 | (Max-Min)/Ts*(t0/2)+Min | (Max-Min)/Ts*(t6 + t0/2)+Min | (Max-Min)/Ts*(t1 + t6 + t0/2)+Min |
| mod2 | (Max-Min)/Ts*(t4 + t0/2)+Min | (Max-Min)/Ts*(t0/2)+Min | (Max-Min)/Ts*(t0/2)+Min |
| mod3 | (Max-Min)/Ts*(t5+t4 + t0/2)+Min | (Max-Min)/Ts*(t5+t6 + t0/2)+Min | (Max-Min)/Ts*(t6+ t0/2)+Min |

Le tableau suivant s'applique pour Min = -1 et Max = 1.

| | Secteur SH1 | Secteur SH2 | Secteur SH3 |
|---|---|---|---|
| mod1 | 2/Ts*(t1 + t2 + t0/2)-1 | 2/Ts*(t2 + t0/2)-1 | 2/Ts*(t0/2)-1 |
| mod2 | 2/Ts*(t2 + t0/2)-1 | 2/Ts*(t3 + t2 + t0/2)-1 | 2/Ts*(t3 + t4 + t0/2)-1 |
| mod3 | 2/Ts*(t0/2)-1 | 2/Ts*(t0/2)-1 | 2/Ts*(t4 + t0/2)-1 |
| | Secteur SH4 | Secteur SH5 | Secteur SH6 |
| mod1 | 2/Ts*(t0/2)-1 | 2/Ts*(t6 +t0/2)-1 | 2/Ts*(t1 + t6 +t0/2)-1 |
| mod2 | 2/Ts*(t4 +t0/2)-1 | 2/Ts*(t0/2)-1 | 2/Ts*(t0/2)-1 |
| mod3 | 2/Ts*(t5 + t4 + t0/2)-1 | 2/Ts*(t5 + t6 + t0/2)-1 | 2/Ts*(t6 + t0/2)-1 |

le temps t0 représente le temps d'application des vecteurs de roue libre $\vec{V}0$ et $\vec{V}7$ . Le temps d'application t0 est déterminé suivant le secteur actif SH dans lequel se trouve le vecteur tension de consigne $\vec{V}*$. Lorsque le vecteur tension de consigne $\vec{V}*$ se trouve dans le premier secteur actif SH1 alors t0 = Ts - t1 - t2. Lorsqu'il est dans le deuxième secteur actif SH2 alors t0 = Ts - t2 - t3. Et ainsi de suite jusqu'au sixième secteur actif SH6 où t0 = Ts - t6 - t1.

Bien entendu, d'autres stratégies peuvent être utilisées dans le calcul de modulantes.

Après avoir déterminé les modulantes de chaque bras de pont selon une stratégie intersective ou barycentrique, tel que décrit ci-dessus, on détermine un bras de pont à bloquer, de façon non limitative, soit par rapport à un vecteur courant $\vec{V}$, soit par rapport à la position d'un vecteur tension $\vec{V}^*$ comme on va le voir ci-après.

Détermination du bras bloqué par rapport à la position du vecteur courant $\vec{I}$

Dans un premier mode de réalisation, on détermine le bras de pont à bloquer par rapport aux courants de phase. Dans ce cas, pour déterminer le bras de pont à bloquer, la logique de commande 4 applique les étapes 40 à 45. On entend qu'on entend par blocage d'un bras de pont le maintien dudit bras de pont dans un état donné. Autrement dit, les états des interrupteurs dudit bras de pont restent inchangés. Il n'y a pas de commutation du bras.

A l'étape 40, la logique de commande détermine le bras de pont à bloquer par rapport au vecteur courant $\vec{I}$. Le blocage d'un bras de pont va permettre de diminuer les pertes par commutation dans les interrupteurs.

A cet effet, à l'étape 41, dans une première variante de réalisation non limitative, la logique de commande 4 sélectionne en premier deux bras de pont, parmi les trois, susceptibles d'être bloqués en fonction d'une relation d'ordre entre les trois modulantes mod1, mod2, mod3 des trois bras de pont, cette relation d'ordre étant dans un exemple non limitatif une comparaison. Ainsi, les deux bras de pont sélectionnés sont le bras de pont ayant la modulante $mod_M$ la plus importante et le bras de pont ayant la modulante $mod_m$ la moins importante selon la comparaison des trois modulantes, le bras de pont correspondant à la modulante intermédiaire ne pouvant être bloqué sans bloquer un autre bras et ainsi rendre impossible la génération en moyenne du vecteur tension de consigne $\vec{V}^*$ car un seul vecteur de commande actif et un seul vecteur de roue libre seraient disponibles.

Dans une deuxième variante de réalisation non limitative, la logique de commande 4 sélectionne les deux bras de pont susceptibles d'être bloqués en fonction d'une comparaison entre les trois consignes de tensions scalaire V1*, V2* et V3* car quelque soit la méthode de calcul des modulantes (ici, intersective ou barycentrique), la relation d'ordre entre les trois modulantes est la même qu'entre les trois consignes de tension scalaires en raison de la relation qui existe entre une modulante et la consigne de tension scalaire correspondante. Les deux bras de pont sélectionnés sont le bras de pont ayant la consigne de tension scalaire la plus importante et le bras de pont ayant la consigne de tension scalaire la moins importante.

Pour la suite des étapes, on se place dans le cadre de la première variante.

La logique de commande 4, à l'étape 42, choisit le bras de pont à bloquer parmi les deux bras sélectionnés précédemment. Elle détermine, d'une part, le courant de phase $I_M$, pour le bras de pont ayant la modulante $mod_M$ la plus importante, et d'autre part le courant de phase $I_m$, pour le bras de pont ayant la modulante $mod_m$ la moins importante. Pour déterminer le bras de pont qui sera bloqué, la logique de commande 4 compare les valeurs absolues de ces courants de phase $I_M$ et $I_m$. Elle bloque le bras de pont dont la valeur absolue du courant de phase est le plus important en valeur absolue. Si cela correspond au bras de pont ayant la modulante la plus importante $mod_M$, alors le bras est bloqué à l'état haut. Si cela correspond au bras de pont ayant la modulante la moins importante $mod_m$, alors le bras est bloqué à l'état bas.

A l'étape 43, la logique de commande 4 détermine une quantité de neutre $V_{n0}$ à injecter aux modulantes mod1, mod2 et mod3, en fonction du résultat de la comparaison.

Dans le cas où, la valeur absolue du courant de phase $I_m$ de la plus petite modulante $mod_m$ est supérieure à la valeur absolue du courant de phase $I_M$ de la plus grande modulante $mod_M$, alors la logique de commande 4 détermine une quantité de neutre $V_{n0}$ qui est égale à une deuxième valeur minimale Min moins la plus petite modulante $mod_m$. La quantité de neutre $V_{n0}$ = Min - $mod_m$. Dans l'exemple pris non limitatif, la deuxième valeur minimale Min est égale à -1.

Dans le cas contraire, la logique de commande 4 détermine une quantité de neutre $V_{n0}$ qui est égale à une première valeur maximale Max moins la plus grande modulante $mod_M$. La quantité de neutre $V_{n0}$ = Max - $mod_M$. Dans l'exemple pris non limitatif,, la première valeur maximale Max est égale à +1.

Les modulantes mod1, mod2 et mod3 sont translatées par ajout de cette quantité de neutre $V_{n0}$, déterminée de manière à bloquer un bras.

Par ailleurs, selon une première variante non limitative, si la valeur absolue du courant de phase $|I_m|$ de la plus petite modulante $mod_m$ est égale à la valeur absolue du courant de phase $|I_m|$ de la plus grande modulante $mod_M$ alors la quantité de neutre $V_{n0}$ est égale à -1 - modm. La Fig: 2 illustre cette première variante.

Selon une deuxième variante, si la valeur absolue du courant de phase $|I_m|$ de la plus petite modulante $mod_m$ est égale à la valeur absolue du courant de phase $|I_M|$ de la plus grande modulante $mod_M$ alors la quantité de neutre $v_{n0}$ est égale à 1 - $mod_M$.

A l'étape 44, la logique de commande 4 détermine au moins une simple porteuse 40. Cette simple porteuse 40 est un signal dont la période est la période de découpage. La logique de commande 4 peut déterminer également autant de simples porteuses qu'il existe de bras de pont. Dans ce cas, chaque modulante d'un bras de pont est comparée à la porteuse correspondante. Ces porteuses peuvent être différentes les unes des autres.

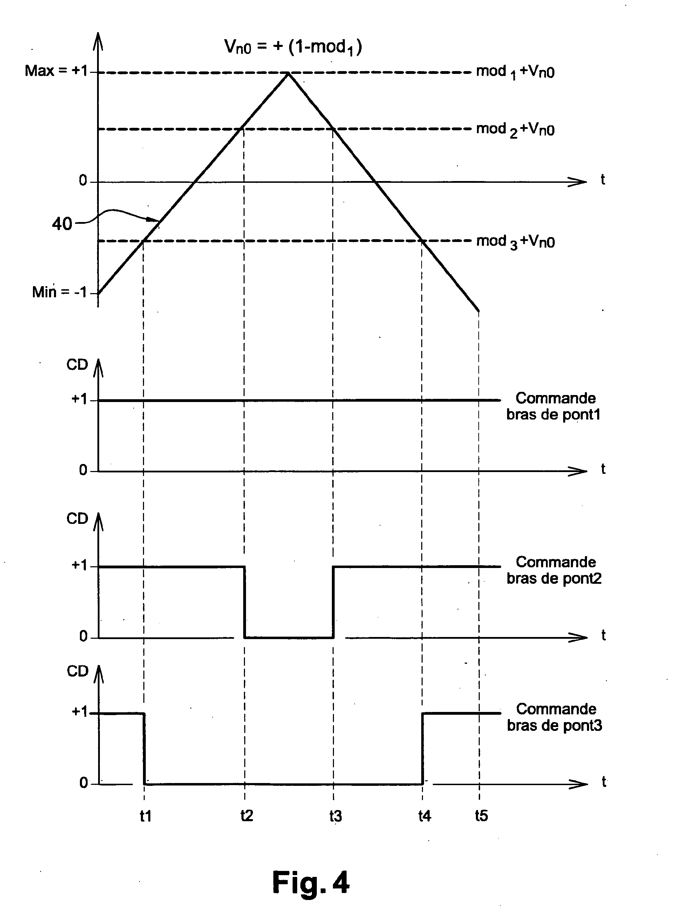

Dans l'exemple de la Fig. 2, la logique de commande 4 détermine une seule simple porteuse pour les trois bras de pont. Cette porteuse 40 est un triangle de manière à respecter une linéarité entre une modulante et la valeur moyenne de l'impulsion générée sur le bras correspondant sur la période Ts de contrôle de l'onduleur 1. Dans l'exemple pris à la Fig. 4, ce triangle est pris entre une première valeur maximale Max, ici égale à 1, et une deuxième valeur minimale Min, ici égale à -1 respectivement pour le sommet et la base. Dans un mode de réalisation non limitatif, cette simple porteuse 40 est un triangle isocèle. De plus, préférentiellement, le sommet pointe vers le haut, i.e. que le sommet se trouve à la première valeur maximale Max = +1, et la base se trouve à la deuxième valeur minimale Min = -1.

Dans un autre mode, cette simple porteuse 40 peut être un triangle quelconque permettant de modifier, si ce n'est la largeur des impulsions, la position desdites impulsions dans la période de découpage ou encore la polarité desdites impulsions (sommet pointant vers le bas).

Dans un autre mode, la porteuse 40 peut être également une succession de triangles dont la période est la période de découpage Ts de l'onduleur 1.

Cette porteuse 40 peut être également un triangle dont le sommet pointe vers le bas, i.e. que le sommet se trouve à la deuxième valeur minimale Min = -1, et la base se trouve à la première valeur maximale Max = +1.

On notera que la période de découpage Ts n'est pas forcément constante lors de l'utilisation de l'onduleur de manière à étaler le spectre des tensions de sortie de l'onduleur 1, de ce fait la période de la porteuse également. Cet étalement de spectre permet de modifier le bruit acoustique généré par la charge polyphasée 3.

Comme il sera décrit à la Fig. 4 (pour plus de détail, voir le paragraphe comparaison avec une simple porteuse décrit plus loin), la logique de commande 4 compare la porteuse 40 aux trois modulantes translatées de la quantité de neutre $V_{n0}$. En fonction de cette comparaison, la logique de commande 4 détermine, à l'étape 45, les ordres de commandes SC pour chacun des trois bras de pont de l'onduleur 1 (plus particulièrement les combinaisons des ordres de commande déterminant une succession de vecteurs de commande) de manière à générer en moyenne le vecteur tension de consigne $\vec{V}^*$ à appliquer à la charge 3 par ledit onduleur 1 pour piloter ladite charge.

Ces ordres de commandes sont des fonctions de commutation SC des interrupteurs des bras de pont.

Ainsi, cette technique du mouvement de la quantité de neutre $V_{n0}$ permet de réduire les sollicitations de l'onduleur 1 en terme de pertes, en faisant une simple intersection entre les nouvelles modulantes translatées. Cette réduction des sollicitations de l'onduleur 1 limite les pertes par commutation. En effet, cette technique permet de bloquer un bras de pont.

La logique de commande 4 applique à l'onduleur 1 les ordres de commandes déterminés à l'étape 45.

Détermination _du bras bloqué par rapport à la position du vecteurtension de consigne $\vec{V}^*$

Dans un second mode de réalisation, on détermine le bras de pont à bloquer par rapport au vecteur tension de consigne $\vec{V}^*$ et plus particulièrement la position sectorielle du vecteur tension de consigne dans un des secteurs angulaires SA du repère statorique. Dans ce cas, pour déterminer le bras de pont à bloquer, la logique de commande 4 applique les étapes 50 à 55.

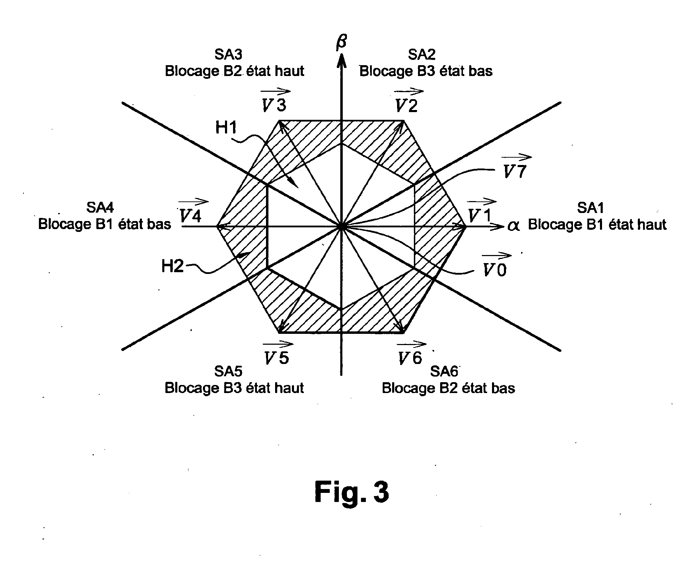

Dans ce cas, le repère statorique est subdivisé en secteurs angulaires SA illustré à la Fig. 3. Chaque secteur angulaire a son sommet au centre du repère statorique et fait un angle de 60°. Chacun des vecteurs de commande actifs coupent en deux parties égales chacun des secteurs angulaires. Le repère statorique comporte six secteurs angulaires SA. Le premier secteur angulaire SA1 est coupé en deux parties égales par le vecteur de commande $\vec{V}1$ ainsi de suite jusqu'au sixième secteur angulaire SA6 qui est coupé par le vecteur de commande $\vec{V}6$.

A l'étape 50, la logique de commande 4 détermine le bras de pont à bloquer par rapport au vecteur tension de consigne $\vec{V}^*$. A l'étape 51, la logique de commande 4 détermine la position sectorielle du vecteur tension de consigne $\vec{V}^*$ dans les secteurs angulaires du repère statorique. La position sectorielle du vecteur tension de consigne $\vec{V}^*$ dans le repère statorique détermine l'état haut ou l'état bas du bras de pont à bloquer.

On notera qu'on entend par blocage d'un bras de pont le maintien dudit bras de pont dans un état donné. Autrement dit, les états des interrupteurs dudit bras de pont restent inchangés. Il n'y a pas de commutation du bras.

L'état haut ou l'état bas, d'un bras de pont, définit lequel des deux interrupteurs dudit bras de pont est passant. Cet état haut et cet état bas sont, en général, définis par commodités. Dans un mode de réalisation non limitatif, on définit l'état haut lorsque les interrupteurs situés en haut de chaque bras de pont de l'onduleur sont fermés. Et on définit l'état bas lorsque ces mêmes interrupteurs sont ouverts. Le fait de connaître l'état d'un des deux interrupteurs d'un bras de pont, renseigne automatiquement sur l'état de l'autre interrupteur dudit bras de pont, car leur fonctionnement est ici complémentaire.

Le bras de pont à bloquer est fonction de la position sectorielle du vecteur tension de consigne $\vec{V}^*$ dans les secteurs angulaires SA du repère statorique de la manière suivante :

-    si le vecteur tension de consigne $\vec{V}^*$ est dans le premier secteur angulaire SA1 alors le premier bras B1 est bloqué à l'état haut,
-    si le vecteur tension de consigne $\vec{V}^*$ est dans le deuxième secteur angulaire SA2 alors le troisième bras B3 est bloqué à l'état bas,

- si le vecteur tension de consigne $\vec{V}*$ est dans le troisième secteur angulaire SA3 alors le deuxième bras B2 est bloqué à l'état haut,
- si le vecteur tension de consigne $\vec{V}*$ est dans le quatrième secteur angulaire SA4 alors le premier bras B1 est bloqué à l'état bas,
- si le vecteur tension de consigne $\vec{V}*$ est dans le cinquième secteur angulaire SA5 alors le troisième bras B3 est bloqué à l'état haut,
- si le vecteur tensions de consigne $\vec{V}*$ est dans le sixième secteur angulaire SA6 alors le deuxième bras B2 est bloqué à l'état bas.

A l'étape 52, La logique de commande 4 détermine une quantité de neutre $V_{n0}$ à injecter aux modulantes mod1, mod2 et mod3, en fonction de la position du vecteur tension de consigne $\vec{V}*$ dans les secteurs angulaires SA du repère statorique.

Lorsque le bras de pont Bj est à bloquer à l'état haut alors la logique de commande détermine une quantité de neutre $V_{n0}$ = Max- $mod_j$. Lorsque le bras de pont Bj est à bloquer à l'état bas alors la logique de commande détermine une quantité de neutre $V_{n0}$ = Min- $mod_j$. Dans notre exemple, on prend Max = +1 et Min = -1.

A l'étape 53, la logique de commande 4 translate les modulantes mod1, mod2 et mod3 de cette quantité de neutre $V_{n0}$ déterminée. Cette translation est un ajout de la quantité de neutre $V_{n0}$ aux modulantes mod1, mod2 et mod3.

Ainsi, par exemple si le premier bras B1 doit être bloqué à l'état haut, alors la quantité de neutre $V_{n0}$ à ajouter aux trois modulantes mod1, mod2 et mod3 est égale à 1- $mod_1$. On obtient ainsi pour mod1, la valeur +1, pour mod2, la valeur mod2 +1 - mod1, et pour mod3, la valeur mod3 +1 -mod1.

A l'étape 54, la logique de commande 4 détermine au moins une porteuse 40. Cette porteuse est une simple porteuse.

Elle comporte les mêmes caractéristiques que celle décrite dans le paragraphe précédent « Détermination du bras bloqué par rapport à la position du vecteur courant $\vec{I}$ ».

Comme il sera décrit à la Fig. 4, (pour plus de détail, voir le paragraphe sur la- comparaison avec une simple porteuse décrit plus loin) la logique de commande 4 compare la porteuse aux trois modulantes translatées de la quantité de neutre $V_{n0}$.

En fonction de cette comparaison, la logique de commande 4 détermine, à l'étape 55, les ordres de commandes pour chacun des trois bras de pont de l'onduleur 1 (plus particulièrement les combinaisons des ordres de commande déterminant une succession de vecteurs de commande) de manière à générer en moyenne le vecteur tension de consigne $\vec{V}*$ à appliquer à la charge 3 par ledit onduleur 1 pour piloter ladite charge.

Ces ordres de commandes sont des fonctions de commutation SC des interrupteurs des bras de pont.

La logique de commande 4 applique à l'onduleur 1 cette succession de vecteurs de commande correspondant aux ordres de commande générés, déterminés à l'étape 55.

Ainsi, cette technique du mouvement de la quantité de neutre $V_{n0}$ permet ainsi de réduire les sollicitations de l'onduleur 1 en terme de pertes, en faisant une simple intersection entre les nouvelles modulantes translatées. Cette réduction des sollicitations de l'onduleur 1 limite les pertes par commutation. En effet, cette technique permet de bloquer un bras de pont.

Comparaison avec une simple porteuse

Ce paragraphe décrit de manière détaillée l'utilisation d'une simple porteuse pour déterminer les ordres de commandes à envoyer aux bras de pont de l'onduleur. Cette simple porteuse est un signal dont la période est la période de découpage. La logique de commande 4 peut déterminer également autant de simples porteuses qu'il existe de bras de pont. Dans ce cas, chaque modulante d'un bras de pont est comparée à la simple porteuse correspondante. Ces simples porteuses peuvent être différentes les unes des autres.

Dans l'exemple de la Fig. 4, la logique de commande 4 détermine une seule simple porteuse pour les trois bras de pont. Cette simple porteuse 40 est un triangle de manière à respecter une linéarité entre une modulante et la valeur moyenne de l'impulsion générée sur le bras correspondant sur la période Ts de contrôle de l'onduleur 1. Dans l'exemple pris à la Fig. 4, ce triangle est pris entre une première valeur maximale Max, ici égale à 1, et une deuxième valeur minimale Min, ici égale à -1 respectivement pour le sommet et la base. Dans un mode de réalisation non limitatif, cette simple porteuse 40 est un triangle isocèle. De plus, de façon non limitative, le sommet pointe vers le haut, i.e. que le sommet se trouve à la première valeur maximale Max = +1, et la base se trouve à la deuxième valeur minimale Min =-1. Dans un autre mode, cette porteuse 40 peut être un triangle quelconque permettant de modifier, si ce n'est la largeur des impulsions, la position desdites impulsions dans la période de découpage ou encore la polarité desdites impulsions (sommet pointant vers le bas).

Dans un autre mode, la porteuse 40 peut être également une succession de triangles dont la période est la période de découpage Ts de l'onduleur 1.

Cette porteuse 40 peut être également un triangle dont le sommet pointe vers le bas, i.e. que le sommet se trouve à la deuxième valeur minimale Min = -1, et la base se trouve à la première valeur maximale Max = +1.

On notera que la période de découpage Ts n'est pas forcément constante lors de l'utilisation de l'onduleur de manière à étaler le spectre des tensions de sortie de l'onduleur 1, de ce fait la période de la porteuse également. Cet étalement de spectre permet de modifier le bruit acoustique généré par la charge polyphasée 3.

La Fig. 4 montre la comparaison entre la simple porteuse 40 et les trois modulantes mod1, mod2 et mod3 translatées de la quantité de neutre $V_{n0}$.

Sur la Fig. 4, le premier chronogramme présente un axe dont l'abscisse représente le temps et l'ordonnée des valeurs normalisées de tension, et les trois autres chronogramme présentent un axe dont l'abscisse représente le temps et l'ordonnée les fonctions de commutation SC de chacun des trois bras de pont respectivement.

Dans l'exemple de la Fig. 4, la modulante mod1 est calculée pour le bras de pont B1, la modulante mod2 est calculée pour le bras de pont B2 et La modulante mod3 est calculée pour le bras de pont B3.

La modulante mod3 est, dans l'exemple de la Fig. 4, la modulante la moins importante entre les trois modulantes et la modulante mod1 est la plus importante. La plus grande des modulantes $mod_M$ égale la modulante mod1. Dans ce cas, la logique de commande 4 bloque le bras de pont B1 car le courant I1 est supérieur au courant I3 en valeur absolue. De ce fait, la quantité de neutre à ajouter aux trois modulantes est $V_{n0}$ = 1- mod1. Le bras de pont B1 bloqué à l'état haut a sa modulante translatée qui vaut +1.

Le bras de pont B1 bloqué à l'état haut présente à l'intersection avec la porteuse 40 triangulaire non pas un intervalle de temps (au sommet de la porteuse, à l'intersection de la porteuse triangulaire et de la modulante mod1+Vn0), mais plutôt une intersection ponctuelle, comme le montre la Fig. 4. Le bras de pont B1 ne change donc pas d'état.

La comparaison entre la porteuse 40 et les modulantes translatées permettent de définir la succession des ordres de commande SC à appliquer à l'onduleur. Ainsi l'intersection entre les modulantes translatées et la porteuse 40 détermine une commande de type impulsionnel (front montant : interrupteur haut se ferme, interrupteur bas s'ouvre ; et front descendant : interrupteur haut s'ouvre et interrupteur bas se ferme) sur chacun des bras de pont B2 et B3 à commuter. De ce fait, la logique de commande 4 commande l'onduleur par une succession de vecteurs de commande.

En fonction de la décomposition du vecteur tension de consigne dans un secteur de l'hexagone, la logique de commande 4 choisit le vecteur de roue libre approprié. Dans l'exemple de la Fig. 4, le vecteur de roue libre choisi est le vecteur V7.

Ainsi, à l'instant t0, le bras de pont B1 est bloqué à l'état haut, sa modulante translatée de la quantité de neutre $V_{n0}$ présente une droite horizontale à +1. A cet instant ton les modulantes translatées des bras de pont B2 et B3 se trouvent en dehors de la porteuse 40, i.e. ne présentent pas d'intersection avec ladite porteuse et se situe à l'extérieur de la surface du triangle formée par la porteuse: Les interrupteurs de ces deux bras de pont sont à l'état haut. Dans cet intervalle, les fonctions de commutation correspondantes valent +1. Ces deux bras restent donc à l'état haut. Ils ne changent donc pas d'état.

A l'instant t1, la modulante mod3 + $V_{n0}$ entre en contact avec un des côtés de la porteuse 40. La logique de commande 4 envoie au bras de pont B3 un ordre de commande SC. Cet ordre de commande commute le bras de pont B3. Le bras de pont B3 change d'état et passe donc à l'état bas.

A l'instant t2, la modulante mod2 + $V_{n0}$ entre en contact avec un des côtés de la porteuse 40. La logique de commande 4 envoie au bras de pont B2 un ordre de commande SC. Cet ordre de commande commute le bras de pont B2. Le bras de pont B2 change donc d'état et passe à l'état bas.

Dans l'intervalle t2 à t3, la modulante mod2 + $V_{n0}$ se trouve dans le triangle de la porteuse 40, i.e. ne présentent pas d'intersection avec ladite porteuse et se situe à l'intérieur de la surface du triangle formée par la porteuse. Pendant toute cette période le bras de pont B2 reste à l'état bas.

A l'instant t3, la modulante mod2 + $V_{n0}$ entre de nouveau en contact avec un autre des côtés de la porteuse 40. A partir de cet instant, la logique de commande 4 envoie au bras de pont B2 un ordre de commande SC. Cet ordre de commande commute le bras de pont B2 à l'état haut.

Dans l'intervalle t1 à t4, la modulante mod3 + $V_{n0}$ se trouve dans le triangle de la porteuse 40. Pendant toute cette période le bras de pont B3 reste à l'état bas.

A l'instant t4, la modulante mod3 + $V_{n0}$ entre de nouveau en contact avec un autre des côtés de la porteuse 40. A partir de cet instant, la logique de commande 4 envoie au bras de pont B3 un ordre de commande SC. Cet ordre de commande commute le bras de pont B3 à l'état haut.

On notera que l'établissement des ordres de commandes SC par la méthode d'intersection entre une modulante et une porteuse triangulaire entraîne que les ordres de commandes SC de l'onduleur sont en tout ou rien. Par ailleurs, en fonction de la valeur de la modulante, la largeur des impulsions résultantes est variable. Il y a donc une modulation de largeur d'impulsions et donc un pilotage de l'onduleur par MLI. C'est ce qu'on a vu sur la Fig. 4.

Enfin, le procédé de l'invention décrit fonctionne aussi bien en régime permanent qu'en régime dynamique. En effet, cela fonctionne en régime dynamique car on ne se soucie pas de l'évolution temporelle des courants de phase.

On les regarde juste à un instant. On fonctionne donc ici en discret.

**Revendications**

1. Procédé de pilotage d'un pont de puissance (1) destiné à commander une charge électrique (3) comportant plusieurs phases, le pont de puissance (1) étant destiné à être relié à la charge électrique (3) via plusieurs bras (B1, ..., B3), au moins un par phase, et étant destiné à être piloté par des fonctions de commutations (SC1, SC2, SC3), lesdites fonctions de commutation déterminant des vecteurs de commande $(\vec{V}0, ..., \vec{V}7)$ pour commander la charge, lesdits vecteurs de commande $(\vec{V}0, ..., \vec{V}7)$ se subdivisant en vecteurs de commande de roue libre $(\vec{V}0, \vec{V}7)$ et en vecteurs de commande actifs $(\vec{V}1, ..., \vec{V}6)$, ledit procédé comportant l'application d'une méthode de production de fonctions de commutations qui produit un nombre réduit de combinaisons de fonctions de commutation correspondant à des vecteurs de commande de roue libre $(\vec{V}0, \vec{V}7)$ pour produire une succession de vecteurs de commandes, **caractérisé en ce que** ladite méthode de production de fonctions de commutations comprend une étape de sélection d'au moins deux bras de pont susceptibles d'être bloqués en fonction d'une relation d'ordre et une étape de bloquer, pendant toute une période de découpage (Ts) du pont de puissance (1), d'un desdits au moins deux bras de pont susceptibles d'être bloqués.

2. Procédé de pilotage d'un pont de puissance (1) selon la revendication 1, **caractérisé en ce que** la méthode de production de fonctions de commutations comporte une étape de détermination d'une modulante ($mod_1$, $mod_2$, $mod_3$) associée à chaque bras du pont (B1, B2, B3) à partir de consignes de tension scalaires (V1*, V2*, V3*), **en ce que** la détermination d'une modulante est effectuée selon une stratégie intersective ou une stratégie barycentrique.

3. Procédé de pilotage d'un pont de puissance (1) selon la revendication précédente, **caractérisé en ce que** la relation d'ordre est une comparaison entre les modulantes (mod1. mod2, mod3) associées aux bras (B1, B2, B3) de pont.

4. Procédé de pilotage d'un pont de puissance (1) selon la revendication précédente 2 ou 3, **caractérisé en ce que** les bras de pont sélectionnés correspondent aux bras de pont ayant la modulante la plus importante ($mod_M$) et la modulante la moins importante ($mod_m$).

5. Procédé de pilotage d'un pont de puissance (1) selon la revendication précédente 2 ou 4, **caractérisé en ce** que le bras de pont à bloquer est choisi parmi les bras de pont sélectionnés et est celui qui comporte un courant de phase ($I_m$, $I_m$) le plus important en valeur absolue parmi des courants de phase correspondant respectivement à une plus grande des modulantes ($mod_M$) et une plus petite des modulantes ($mod_m$) parmi les modulantes (mod1. mod2, mod3) associées aux bras de pont (B1. B2, B3).

6. Procédé de pilotage d'un pont de puissance (1) selon la revendication précédente, **caractérisé en ce** que si le bras de pont à bloquer est celui correspondant à la plus grande des modulantes, alors le bras de pont est bloqué à l'état haut, et si le bras de pont à bloquer est celui correspondant à la plus petite des modulantes, alors le bras de pont est bloqué à l'état bas.

7. Procédé de pilotage d'un pont de puissance (1) selon l'une des revendications précédentes 2 à 6, **caractérisé en ce que** la méthode de production des fonctions de commutation comporte en outre une étape de déterminer une quantité de neutre ($V_{no}$) à ajouter à une modulante en fonction d'un état haut ou bas d'un bras de pont à bloquer.

8. Procédé de pilotage d'un pont de puissance (1) selon la revendication précédente, **caractérisé en ce que** :

   - si un bras (Bj) doit être bloqué à l'état haut alors la quantité de neutre ($v_{n0}$) est égale à une première valeur maximale (Max) moins la modulante associée audit bras ($v_{n0}$ = Max - $mod_j$), et
   - si le bras (Bj) doit être bloqué à l'état bas alors la quantité de neutre ($v_{n0}$) est égale à une deuxième valeur minimale (Min) moins la modulante associée audit bras ($v_{n0}$ = Min - $mod_j$).

9. Procédé de pilotage d'un pont de puissance (1) selon l'une des revendications précédentes 2 à 8, **caractérisé en ce que** la méthode de production de fonctions de commutations comporte une étape de comparaison de modulantes translatées d'une quantité de neutre avec une simple porteuse, une modulante étant associée à chaque bras de pont, ladite comparaison définissant des fonctions de commutation (SC) pour piloter ledit pont.

**10.** Procédé selon la revendication précédente, **caractérisé en ce que** la simple porteuse est un triangle isocèle comportant un sommet se trouvant à une valeur maximale (Max) et une base se trouvant à une valeur minimale (Min).

**11.** Procédé de pilotage d'un pont de puissance (1) selon l'une des revendications précédentes 2 à 10, *caractérisé en ce que* l'étape de blocage d'un bras de pont est fonction de la position d'un vecteur tension de consigne ($\vec{V}*$) dans un domaine du plan déterminé par des vecteurs de commande ($\vec{V}0$ ,..., $\vec{V}7$ ), le vecteur tension de consigne ($\vec{V}*$) étant déterminé à partir de consignes de tension scalaires (V1*, V2*, V3*).

**12.** procédé de pilotage d'un pont de puissance (1) selon la revendication précédente, *caractérisé en ce que* le domaine du plan est défini dans un repère statorique, ledit repère statorique étant subdivisé en secteurs angulaires (SA) et **en ce que** l'étape de blocage d'un bras de pont dans un état haut ou un état bas est fonction de la position du vecteur tension de consigne ($\vec{V}*$) dans un des secteurs angulaires (SA).

**13.** Procédé selon la revendication précédente, **caractérisé en ce que** :

- si le vecteur tension de consigne ($\vec{V}*$) est dans un premier secteur angulaire (SA1) alors le premier bras (B1) est bloqué à l'état haut,
- si le vecteur tension de consigne ($\vec{V}*$) est dans un deuxième secteur angulaire (SA2) alors le troisième bras (B3) est bloqué à l'état bas,
- si le vecteur tension de consigne ($\vec{V}*$) est dans un troisième secteur angulaire (SA3) alors le deuxième bras (B2) est bloqué à l'état haut,
- si le vecteur tension de consigne ($\vec{V}*$) est dans un quatrième secteur angulaire (SA4) alors le premier bras (B1) est bloqué à l'état bas,
- si le vecteur tension de consigne ($\vec{V}*$) est dans un cinquième secteur angulaire (SA5) alors le troisième bras (B3) est bloqué à l'état haut,
- si le vecteur tension de consigne ($\vec{V}*$) est dans un sixième secteur angulaire (SA6) alors le deuxième bras (B2) est bloqué. à l'état bas.

**14.** Procédé de pilotage d'un pont de puissance (1) selon l'une des revendications précédentes 1 à 13, *caractérisé en ce que* l'étape de blocage d'un bras de pont est fonction d'un vecteur courant ($\vec{V}*$).


**Claims**

**1.** Method for driving a power bridge (1) intended to control an electrical load (3) comprising a number of phases, the power bridge (1) being intended to be linked to the electrical load (3) via a number of arms (B1, ..., B3), at least one per phase, and being intended to be driven by switching functions (SC1, SC2, SC3), said switching functions determining control vectors ($\vec{V}0$,..., ($\vec{V}7$) for controlling the load, said control vectors ($\vec{V}0$,..., ($\vec{V}7$) being subdivided into freewheel control vectors ($\vec{V}0$,..., ($\vec{V}7$) and into active control vectors ($\vec{V}0$,..., ($\vec{V}6$), said method comprising the application of a method for producing switching functions which produces a small number of combinations of switching functions corresponding to freewheel control vectors ($\vec{V}$,..., ($\vec{V}7$) to produce a succession of control vectors, **characterized in that** said method for producing switching functions comprises a step for selecting at least two bridge arms likely to be blocked according to an order relationship and a step for blocking, throughout a chopping period (Ts) of the power bridge (1), one of said at least two bridge arms likely to be blocked.

**2.** Method for driving a power bridge (1) according to Claim 1, **characterized in that** the method for producing switching functions comprises a step for determining a modulant ($mod_1$, $mod_2$, $mod_3$) associated with each arm of the bridge (B1, B2, B3) based on scalar voltage setpoints (V1*, V2*, V3*), **in that** the determination of a modulant is performed according to an intersecting strategy or a barycentric strategy.

**3.** Method for driving a power bridge (1) according to the preceding claim, **characterized in that** the order relationship is a comparison between the modulants ($mod_1$, $mod_2$, $mod_3$) associated with the bridge arms (B1, B2, B3).

**4.** Method for driving a power bridge (1) according to the preceding Claim 2 or 3, **characterized in that** the selected bridge arms correspond to the bridge arms that have the most significant modulant ($mod_M$) and the least significant modulant ($mod_m$).

**5.** Method for driving a power bridge (1) according to the preceding Claim 2 or 4, **characterized in that** the bridge arm to be blocked is chosen from the selected bridge arms and is the one which has a phase current ($I_M$, $I_m$) that is the highest as an absolute value out of the phase currents respectively corresponding to a greatest of the modulants ($mod_M$) and a smallest of the modulants ($mod_m$) out of the modulants ($mod_1$, $mod_2$, $mod_3$) associated with the bridge arms (B1, B2, B3).

6. Method for driving a power bridge (1) according to the preceding claim, **characterized in that**, if the bridge arm to be blocked is the one corresponding to the greatest of the modulants, then the bridge arm is blocked in the high state, and if the bridge arm to be blocked is the one corresponding to the smallest of the modulants, then the bridge arm is blocked in the low state.

7. Method for driving a power bridge (1) according to one of the preceding Claims 2 to 6, **characterized in that** the method for producing switching functions also comprises a step for determining a neutral quantity ($V_{n0}$) to be added to a modulant according to a high or low state of a bridge arm to be blocked.

8. Method for driving a power bridge (1) according to the preceding claim, **characterized in that**:

   - if an arm (Bj) has to be blocked in the high state, then the neutral quantity ($v_{n0}$) is equal to a first maximum value (Max) minus the modulant associated with said arm ($v_{n0}$ = Max - $mod_j$), and
   - if the arm (Bj) has to be blocked in the low state, then the neutral quantity ($v_{n0}$) is equal to a second minimum value (Min) minus the modulant associated with said arm ($v_{n0}$ = Min - $mod_j$).

9. Method for driving a power bridge (1) according to one of the preceding Claims 2 to 8, **characterized in that** the method for producing switching functions comprises a step for comparing modulants translated by a neutral quantity with a single carrier, a modulant being associated with each bridge arm, said comparison defining switching functions (SC) for driving said bridge.

10. Method according to the preceding claim, **characterized in that** the single carrier is an isosceles triangle having an apex located at a maximum value (Max) and a base located at a minimum value (Min).

11. Method for driving a power bridge (1) according to one of the preceding Claims 2 to 10, **characterized in that** the step for blocking a bridge arm depends on the position of a setpoint voltage vector ($\vec{V}8$) in a field of the plane determined by control vectors ($\vec{V}0$,..., ($\vec{V}7$), the setpoint voltage vector ($\vec{V}0$) being determined from scalar voltage setpoints (V1*, V2*, V3*).

12. Method for driving a power bridge (1) according to the preceding claim, **characterized in that** the field of the plane is defined in a stator frame of reference, said stator frame of reference being subdivided into angular segments (SA) and **in that** the step for blocking a bridge arm in a high state or a low state depends on the position of the setpoint voltage vector ($\vec{V}*$) in one of the angular segments (SA).

13. Method according to the preceding claim, **characterized in that**:

   - if the setpoint voltage vector ($\vec{V}*$) is in a first angular segment (SA1) then the first arm (B1) is blocked in the high state,
   - if the setpoint voltage vector ($\vec{V}*$) is in a second angular segment (SA2) then the third arm (B3) is blocked in the low state,
   - if the setpoint voltage vector ($\vec{V}*$) is in a third angular segment (SA3) then the second arm (B2) is blocked in the high state,
   - if the setpoint voltage vector ($\vec{V}*$) is in a fourth angular segment (SA4) then the first arm (B1) is blocked in the low state,
   - if the setpoint voltage vector ($\vec{V}*$) is in a fifth angular segment (SA5) then the third arm (B3) is blocked in the high state,
   - if the setpoint voltage vector ($\vec{V}*$) is in a sixth angular segment (SA6) then the second arm (B2) is blocked in the low state.

14. Method for driving a power bridge (1) according to one of the preceding Claims 1 to 13, **characterized in that** the step for blocking a bridge arm depends on a current vector ($\vec{V}*$).

**Patentansprüche**

1. Verfahren zur Steuerung einer Leistungsbrücke (1), die dazu bestimmt ist, eine mehrere Phasen aufweisende elektrische Last (3) zu steuern, wobei die Leistungsbrücke (1) dazu bestimmt ist, mit der elektrischen Last (3) über mehrere Schenkel (B1, ......, B3), mindestens einen pro Phase, verbunden zu werden, und dazu bestimmt ist, von Schaltfunktionen (SC1, SC2, SC3) gesteuert zu werden, wobei die Schaltfunktionen Steuervektoren ($\overline{V}0, ..., \overline{V}7$) zum Steuern der Last bestimmen, wobei die Steuervektoren ($\overline{V}0, ..., \overline{V}7$) in Freilaufsteuerungs-Vektoren ($\overline{V}0, \overline{V}7$) und aktive Steuervektoren ($\overline{V}1, ..., \overline{V}6$) unterteilt sind, wobei das Verfahren die Anwendung einer Methode zur Erzeugung von Schaltfunktionen aufweist, die eine reduzierte Anzahl von Kombinationen von Schaltfunktionen entsprechend Freilaufsteuerungs-Vektoren ($\overline{V}0, \overline{V}7$) erzeugt, um eine Folge von Steuervektoren zu erzeugen, **dadurch gekennzeichnet, dass** die Methode zur Erzeugung von Schaltfunktionen einen Schritt der Auswahl von mindestens zwei Brückenschenkeln, die abhängig von einer Ordnungsrelation blockiert werden können, und einen Schritt des Blockierens eines der mindestens zwei Brückenschenkel, die blockiert werden können, während einer ganzen Taktperiode (Ts) der Leistungsbrücke (1) enthält.

2. Verfahren zum Steuern einer Leistungsbrücke (1) nach Anspruch 1, **dadurch gekennzeichnet, dass** die Methode zur Erzeugung von Schaltfunktionen einen Schritt der Bestimmung einer Modulierenden ($mod_1, mod_2, mod_3$), die jedem Schenkel der Brücke (B1, B2, B3) zugeordnet ist, ausgehend von skalaren Spannungssollwerten (V1*, V2*, V3*) aufweist, dass die Bestimmung einer Modulierenden gemäß einer intersektiven Strategie oder einer baryzentrischen Strategie durchgeführt wird.

3. Verfahren zum Steuern einer Leistungsbrücke (1) nach dem vorhergehenden Anspruch, **dadurch gekennzeichnet, dass** die Ordnungsrelation ein Vergleich zwischen den den Brückenschenkeln (B1, B2, B3) zugeordneten Modulierenden (mod1, mod2, mod3) ist.

4. Verfahren zum Steuern einer Leistungsbrücke (1) nach dem vorhergehenden Anspruch 2 oder 3, **dadurch gekennzeichnet, dass** die ausgewählten Brückenschenkel den Brückenschenkeln entsprechen, die die größte Modulierende ($mod_M$) und die kleinste Modulierende ($mod_m$) haben.

5. Verfahren zum Steuern einer Leistungsbrücke (1) nach dem vorhergehenden Anspruch 2 oder 4, **dadurch gekennzeichnet, dass** der zu blockierende Brückenschenkel aus den ausgewählten Brückenschenkel ausgewählt wird und derjenige ist, der einen Phasenstrom ($I_M$, Im) aufweist, der unter den Phasenströmen der größte im Absolutwert ist, die einer größeren der Modulierenden ($mod_M$) bzw. einer kleineren Modulierenden ($mod_m$) unter den Modulierenden (mod1, mod2, mod3) entsprechen, die den Brückenschenkeln (B1, B2, B3) zugeordnet sind.

6. Verfahren zum Steuern einer Leistungsbrücke (1) nach dem vorhergehenden Anspruch, **dadurch gekennzeichnet, dass**, wenn der zu blockierende Brückenschenkel derjenige ist, der der größeren der Modulierenden entspricht, der Brückenschenkel im hohen Zustand blockiert wird, und wenn der zu blockierende Brückenschenkel derjenige ist, der der kleineren der Modulierenden entspricht, der Brückenschenkel im niedrigen Zustand blockiert wird.

7. Verfahren zum Steuern einer Leistungsbrücke (1) nach einem der vorhergehenden Ansprüche 2 bis 6, **dadurch gekennzeichnet, dass** die Methode zur Erzeugung der Schaltfunktionen außerdem einen Schritt der Bestimmung einer Neutralleiter-Menge ($V_{n0}$) aufweist, die zu einer Modulierenden abhängig von einem hohen oder niedrigen Zustand eines zu blockierenden Brückenschenkels hinzuzufügen ist.

8. Verfahren zum Steuern einer Leistungsbrücke (1) nach dem vorhergehenden Anspruch, **dadurch gekennzeichnet, dass**:

   - wenn ein Schenkel (Bj) im hohen Zustand blockiert werden soll, die Neutralleiter-Menge ($v_{n0}$) dann gleich einem ersten maximalen Wert (Max) minus der dem Schenkel zugeordneten Modulierende ist ($v_{n0}$ = Max - $mod_j$), und
   - wenn der Schenkel (Bj) im niedrigen Zustand blockiert werden soll, die Neutralleiter-Menge ($v_{n0}$) dann gleich einem zweiten minimalen Wert (Min) minus der dem Schenkel zugeordneten Modulierende ist ($v_{n0}$ = Min - $mod_j$).

9. Verfahren zum Steuern einer Leistungsbrücke (1) nach einem der vorhergehenden Ansprüche 2 bis 8, **dadurch gekennzeichnet, dass** die Methode zur Erzeugung von Schaltfunktionen einen Schritt des Vergleichs von Modulierenden aufweist, die um eine Neutralleiter-Menge mit einer einfachen Trägerwelle verschoben werden, wobei eine Modulierende jedem Brückenschenkel zugeordnet ist, wobei der Vergleich Schaltfunktionen (SC) definiert, um die Brücke zu steuern.

10. Verfahren nach dem vorhergehenden Anspruch, **dadurch gekennzeichnet, dass** die einfache Trägerwelle ein gleichschenkliges Dreieck ist, das einen Scheitel, der sich auf einem maximalen Wert (Max) befindet, und eine Basis aufweist, die sich auf einem minimalen Wert (Min) befindet.

11. Verfahren zum Steuern einer Leistungsbrücke (1) nach einem der vorhergehenden Ansprüche 2 bis 10, **dadurch gekennzeichnet, dass** der Schritt des Blockierens eines Brückenschenkels von der Stellung eines Sollspannungsvektors ($\vec{V}$*) in einem Bereich der von Steuervektoren ($\vec{V}$0, ..., $\vec{V}$7) bestimmten Ebene abhängt, wobei der Sollspannungsvektor ($\vec{V}$*) ausgehend von skalaren Spannungssollwerten (V1*, V2*, V3*) bestimmt wird.

12. Verfahren zum Steuern einer Leistungsbrücke (1) nach dem vorhergehenden Anspruch, **dadurch gekennzeichnet, dass** der Bereich der Ebene in einem Stator-Bezugssystem definiert ist, wobei das Stator-Bezugssystem in Winkelsektoren (SA) unterteilt ist, und dass der Schritt des Blockierens eines Brückenschenkels in einem hohen Zustand oder einem niedrigen Zustand von der Stellung des Sollspannungsvektors ($\vec{V}$*) in einem der Winkelsektoren (SA) abhängt.

13. Verfahren nach dem vorhergehenden Anspruch, **dadurch gekennzeichnet, dass**:

- wenn der Sollspannungsvektor ($\vec{V}$*) in einem ersten Winkelsektor (SA1) ist, der erste Schenkel (B1) im hohen Zustand blockiert wird,
- wenn der Sollspannungsvektor ($\vec{V}$*) in einem zweiten Winkelsektor (SA2) ist, der dritte Schenkel (B3) im niedrigen Zustand blockiert wird,
- wenn der Sollspannungsvektor ($\vec{V}$*) in einem dritten Winkelsektor (SA3) ist, der zweite Schenkel (B2) im hohen Zustand blockiert wird,
- wenn der Sollspannungsvektor ($\vec{V}$*) in einem vierten Winkelsektor (SA4) ist, der erste Schenkel (B1) im niedrigen Zustand blockiert wird,
- wenn der Sollspannungsvektor ($\vec{V}$*) in einem fünften Winkelsektor (SA5) ist, der dritte Schenkel (B3) im hohen Zustand blockiert wird,
- wenn der Sollspannungsvektor ($\vec{V}$*) in einem sechsten Winkelsektor (SA6) ist, der zweite Schenkel (B2) im niedrigen Zustand blockiert wird.

14. Verfahren zum Steuern einer Leistungsbrücke (1) nach einem der vorhergehenden Ansprüche 1 bis 13, **dadurch gekennzeichnet, dass** der Schritt des Blockierens eines Brückenschenkels von einem laufenden Vektor ($\vec{V}$*) abhängt.

| ACQUISITION | 12 |
| CALCUL MODULANTES | 13 |
| VECTEUR CONSIGNE | 14 |
| RELATION D'ORDRE | 15 |
| MESURE ET COMPARAISON DE I | 16 |
| QUANTITE NEUTRE | 17 |
| PORTEUSE | 18 |
| COMPARAISON | 19 |
| ELECTION | 20 |
| APPLICATION | 21 |

$\mu P$

8

4

11

9

CONSINGES

10

17

2

5   6

3

| SOURCE DE TENSION CONTINUE: -BATTERIE -RESEAU REDRESSE -ETC. | CABLAGE COTE CONTINU: -LIGNE DE CONNEXION -CONSOMMATEURS ELECTRIQUES -ETC. | Idc Udc | ONDULEUR POLYPHASE (B1,B2,B3) | |

7   1

Fig. 1A

Fig. 1b

Fig. 1c

ACQUISITION OU CALCUL DES
CONSIGNES DE TENSION — 30

$V_1^*$ $V_2^*$ $V_3^*$

CALCUL DES MODULANTES — 31

$mod_1$ $mod_2$ $mod_3$

POSITION VECTORIELLE DE $\overrightarrow{\nu^*}$
DANS L'HEXAGONE — 32

50

DETERMINATION DU BRAS A
BLOQUER/VECTEUR TENSION

DETERMINATION DU BRAS A
BLOQUER/VECTEUR COURANT — 40

POSITION VECTORIELLE DE
$\overrightarrow{\nu^*}$ DANS L'HEXAGONE. — 51

RELATION D'ORDRE ENTRE
LES MODULANTES — 41

$mod_i$ $mod_M$
$mod_m$

$|I_m| \geq |I_M|$ — 42

NON

$V_{n0}$ IMPOSEE PAR POSITION
VECTORIELLE DU VECTEUR
-SI BLOCAGE DU BRAS j à
ETAT HAUT : $V_{n0} = 1 - mod_j$
-SI BLOCAGE DU BRAS j à
ETAT BAS : $V_{n0} = -1 - mod_j$ — 52

OUI

43

$V_{n0} = -1 - mod_m$
$mod_1 = mod_1 + V_{n0}$
$mod_2 = mod_2 + V_{n0}$
$mod_3 = mod_3 + V_{n0}$

$V_{n0} = -1 - mod_M$
$mod_1 = mod_1 + V_{n0}$
$mod_2 = mod_2 + V_{n0}$
$mod_3 = mod_3 + V_{n0}$

53

$mod_1 = mod_1 + V_{n0}$
$mod_2 = mod_2 + V_{n0}$
$mod_3 = mod_3 + V_{n0}$

COMPARAISON MODULANTE — 44
TRIANGLE MONOPORTEUSE — 54

**Fig. 2**

45

ORDRE DE COMMANDE DES BRAS DE
PONT DE L'ONDULEUR

55

**Fig. 3**

$$V_{n0} = + (1-mod_1)$$

Max = +1 — — — — — — — — — — — — — — — $mod_1 + V_{n0}$

— — — — — — — — — — — — — — — — — $mod_2 + V_{n0}$

0

40

— — — — — — — — — — — — — — — — $mod_3 + V_{n0}$

Min = -1

t

CD
+1    Commande
bras de pont1
0    t

CD
+1    Commande
bras de pont2
0    t

CD
+1    Commande
bras de pont3
0    t

t1    t2    t3    t4    t5

## Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 5706186 A

**Littérature non-brevet citée dans la description**

• **A.M. Hava ; R.J. Kerkman ; T.A. Lipo.** A high performance generalized discontinuous pwm algorithm. *IEEE Trans. on Industry Applications,* Septembre 1998, vol. 34 (5